Europäisches Patentamt

European Patent Office

Office européen des brevets

(19)

(11) Veröffentlichungsnummer : **0 014 399**
**B1**

(12) **EUROPÄISCHE PATENTSCHRIFT**

(45) Veröffentlichungstag der Patentschrift :
11.05.83

(51) Int. Cl.³ : **F 16 K 11/087**

(21) Anmeldenummer : **80100403.7**

(22) Anmeldetag : **26.01.80**

(54) **Mischventil für Flüssigkeiten.**

(30) Priorität : **03.02.79 DE 2904131**

(43) Veröffentlichungstag der Anmeldung :
**20.08.80 Patentblatt 80/17**

(45) Bekanntmachung des Hinweises auf die Patenterteilung : **11.05.83 Patentblatt 83/19**

(84) Benannte Vertragsstaaten :
**AT BE CH DE FR GB IT LU NL SE**

(56) Entgegenhaltungen :
**FR A 2 241 031**
**US A 3 674 048**

(73) Patentinhaber : **Hans Grohe GmbH & Co KG**
**Postfach 45**
**D-7622 Schiltach (DE)**

(72) Erfinder : **Lorch, Werner**
**Hammergraben 84/1**
**D-7230 Schramberg (DE)** ·

(74) Vertreter : **Patentanwälte Ruff und Beier**
**Neckarstrasse 50**
**D-7000 Stuttgart 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Mischventil für Flüssigkeiten

Die Erfindung betrifft ein Mischventil für Flüssigkeiten, insbesondere für sanitäre Zwecke, mit einem Kugelküken, das miteinander kommunizierende Ein- und Auslaßöffnungen aufweist, einem Ventilgehäuse, das für das Kugelküken eine diesem angepaßte Ventilfläche aufweist, in die zwei mit wenigsten einer Einlaßöffnung des Kugelkükens in Kommunikation bringbare Einlaßkanäle für die zu mischenden Flüssigkeiten und ein Auslaßkanal münden, und einer mit dem Kugelküken verbundenen und in einer Ausnehmung des Ventilgehäuses geführten Betätigungsstange, mittels der das Kugelküken zur Veränderung der Menge der ausströmenden Flüssigkeit verschwenkbar und zur Veränderung des Mischungsverhältnisses der zuströmenden Flüssigkeiten drehbar ist, wobei die Ein- und Auslaßöffnungen des Kugelkükens jeweils spiegelbildlich zu einer durch die Betätigungsstangen-Achse und senkrecht zur Schwenkachse verlaufenden Symmetrieebene angeordnet sind.

Derartige, z. B. aus der FR-A-2 241 031 bekannte Mischventile erfreuen sich insbesondere wegen ihrer leichten und bequemen Bedienbarkeit allgemeiner Beliebtheit. Dies gilt nicht nur deshalb, weil sie einhändig bedienbar sind, sondern insbesondere auch deshalb, weil sie — ohne Veränderung des eingestellten Mischungsverhältnisses der zuströmenden Flüssigkeiten (z. B. Warm- und Kaltwasser) — durch einfaches Niederdrücken ihrer Betätigungsstange bzw. des mit dieser starr verbundenen Griffes geschlossen und durch einfaches Anheben ihrer Betätigungsstange bzw. des mit dieser starr verbundenen Griffes geöffnet werden können. Dies ist nicht nur in den Fällen von Vorteil, wo eine rasche Ventilöffnung oder ein rascher Ventilschluß erwünscht ist, sondern insbesondere auch in den Fällen, in denen eine Verschmutzung der Betätigungsstange bzw. deren Griff (z. B. durch verschmutzte Hände) oder eine Verschmutzung der Hände durch die Betätigungsstange bzw. deren Griff (z. B. in Arztpraxen) vermieden werden soll.

Sollen Mischventile der eingangs beschriebenen Art z. B. als Waschbecken-Armaturen der Mischung von Warm- und Kaltwasser dienen, so sind sie stets so zu montieren, daß ein Drehen ihrer Betätigungsstange bzw. ein Schwenken oder Drehen des mit dieser starr verbundenen Griffes nach rechts eine Herabsetzung der Temperatur des ausströmenden Wassers und ein Drehen ihrer Betätigungsstange bzw. ein Schwenken oder Drehen des mit dieser starr verbundenen Griffes nach links eine Erhöhung der Temperatur des ausströmenden Wassers bewirkt. Bei den bisher bekannten Mischventilen der eingangs beschriebenen Art ist dies jedoch nur dann möglich, wenn die Warm- und Kaltwasser-Zuflußleitungen stets entsprechend verlaufen, d. h. aus der Sicht des Waschbeckenbenutzers die Kaltwasserleitung rechts und die Warmwasserleitung links, da anderenfalls ohne unerwünschte, kostspielige und oft auch aus Platzgründen nicht einfach realisierbare Zuleitungs-Überkreuzungen ein Drehen der Betätigungsstange bzw. ein Schwenken oder Drehen des mit dieser starr verbunden Griffes nach rechts keine Herabsetzung sondern eine Erhöhung der Temperatur des ausströmenden Wassers zur Folge hat.

Besonders problematisch wird dies z. B. in den Fällen, in denen es gilt, gleiche und mit gleichen Mischventilen ausgestattete Waschbecken platz- und raumsparend beiderseits einer Wand zu montieren und an in dieser Wand nebeneinander und senkrecht verlegte Warmwasser- und Kaltwasser-Zuflußleitungen anzuschließen, da die Warmwasserzuflußleitung aus der Sicht des Waschbeckenbenutzers auf der einen Seite einer solchen Wand rechts und auf der anderen Seite einer solchen Wand links von der Kaltwasser-Zuflußleitung verläuft.

Der Erfindung liegt die Aufgabe zugrunde, einerseits ein Mischventil der eingangs beschriebenen Art dahingehend zu verbessern, daß es ohne Überkreuzung der Zuflußleitungen sowohl in den Fällen eingesetzt werden kann, in denen die Warmwasser-Zuflußleitung links von der Kaltwasser-Zuflußleitung verläuft als auch in den Fällen, in denen die Warmwasser-Zuflußleitung rechts von der Kaltwasser-Zuflußleitung verläuft und andererseits darin, bei einem bereits vorhandenen Mischventil eine Zulaufkreuzung bzw. Steuerumkehr ohne großen technischen Aufwand zu ermöglichen.

Diese Aufgabe wird erfindungsgemäß durch ein Mischventil gelöst, bei dem die Einlaßöffnungen und die Auslaßöffnungen des Kugelkükens Abschnitte aufweisen, die im wesentlichen auf dem gleichen Breitengrad des Kugelkükens in Bezug auf dessen durch seine Betätigungsstange verlaufende Drehachse angeordnet sind, bei dem der Schnittpunkt zwischen der Symmetrieebene und dem Breitengrad auf der einen Seite des Kugelkükens mit einem Öffnungsabschnitt zusammenfällt und auf der anderen Seite auf einem geschlossenen Zwischenbereich zwischen zwei Öffnungsabschnitten liegt, und bei dem schließlich die Einlaß- und Auslaßöffnungen des Kugelkükens durch einen um die Betätigungsstangen-Achse um 180° versetzten Einsatz des Kugelkükens in das Gehäuse vertauschbar sind, so daß die Bewegungsrichtung für die Änderung des Mischungsverhältnisses vertauscht ist.

Die Einlaßöffnungen und die Auslaßöffnungen des Kugelkükens können sowohl in der Zahl als auch in der Anordnung, in der Gestaltung und/oder der Größe voneinander abweichen, worauf in der nachfolgenden Beschreibung noch näher eingegangen werden wird.

Bei einer bevorzugten Ausführungsform des erfindungsgemäßen Mischventiles ist dessen Kugelküken im wesentlichen als Hohlkugel ausgebildet, die materialsparend herstellbar ist und den Vorteil hat, nach Art einer Mischkammer einer guten Durchmischung der zu mischenden Flüssigkeiten dienen zu können.

Das Kugelküken des erfindungsgemäßen Mischventiles weist vorzugsweise auf der einen Seite eine gerade und auf der anderen Seite eine ungerade Zahl an auf dem Breitengrad liegenden Öffnungsabschnitten auf.

Auf der Seite des Kugelkükens mit der geraden Zahl an Öffnungen bzw. Öffnungsabschnitten können mindestens zwei, vorzugsweise vier und auf der anderen Seite des Kugelkükens, also auf der Seite mit der ungeraden Zahl an Öffnungen bzw. Öffnungsabschnitten mindestens eine, vorzugsweise drei Öffnungen bzw. Öffnungsabschnitte vorgesehen sein.

Die Querschnittsfläche von äußeren Öffnungen der Seite mit der geraden Zahl an Öffnungen bzw. Öffnungsabschnitten und die Querschnittsfläche der mittleren Öffnung auf der Seite mit der ungeraden Zahl an Öffnungen bzw. Öffnungsabschnitten entsprechen vorzugsweise mindestens der Querschnittsfläche je eines in das Ventilgehäuse mündenden Einlaßkanales, worauf in der nachfolgenden Beschreibung noch gesondert eingegangen werden wird.

Die Öffnungen im Kugelküken können auf einer Seite, vorzugsweise auf der Seite mit der ungeraden Zahl an Öffnungen bzw. Öffnungsabschnitten jeweils kreisförmig ausgebildet sein. Mindestens auf einer Seite des Kugelkükens, vorzugsweise auf der Seite der geraden Zahl an Öffnungen, bzw. Öffnungsabschnitten, können die Öffnungen im Kugelküken jeweils die Form eines liegenden Rechteckes auf weisen, dessen von der Symmetrieebene abgewandte Schmalseite im wesentlichen halbkreisförmig ausgebildet ist

Bei einer bevorzugten Ausführungsform weisen die Öffnungen im Kugelküken auf mindestens einer Seite, vorzugweise auf der Seite, auf der der Schnittpunkt zwischen der Symmetrieebene und dem Breitengrad auf einem geschlossenen Zwischenbereich zwischen zwei Öffnungsabschnitten liegen, jeweils die Form eines Trapezes mit abgerundeten Ecken auf.

Die Öffnungen im Kugelküken, die näher an der Symmetrieebene liegen, sind auf der Seite, auf der der Schnittpunkt zwischen der Symmetrieebene und dem Breitengrad auf einem geschlossenen Zwischenbereich zwischen zwei Öffnungen liegt, kleiner ausgebildet als die von der Symmetrieebene weiter entfernt liegenden Öffnungen.

Die Öffnung bzw. die Öffnungen im Kugelküken, die näher an der Symmetrieebene liegen, sind auf der Seite, auf der der Schnittpunkt zwischen der Symmetrieebene und dem Breitengrad mit einem Öffnungsabschnitt zusammenfällt, vorzugsweise größer ausgebildet als die von der Symmetrieebene weiter entfernt liegenden Öffnungen.

Auf der Seite, auf der der Schnittpunkt zwischen der Symmetrieebene und dem Breitengrad mit einem Öffnungsabschnitt zusammenfällt, kann statt einer ungeraden Zahl an Öffnungen bzw. Öffnungsabschnitten auch nur eine quergestreckte Öffnung vorgesehen sein, die in der Mitte im wesentlichen kreisförmig ausgebildet ist und an die sich seitliche Öffnungsabschnitte, vorzugsweise Ovalhälften mit kleinerem äußeren Kreisbogenradius anschließen, worauf in der nachfolgenden Beschreibung einer bevorzugten Ausführungsform des erfindungsgemäßen Mischventiles im Zusammenhang mit der zugehörigen Zeichnung noch ebenso verwiesen werden wird, wie darauf, daß der von der Symmetrieebene durchquerte Zwischenbereich zwischen den Öffnungsabschnitten auf der Kugelkükenseiten, auf der der Schnittpunkt zwischen der Symmetrieebene und dem Breitengrad auf einem geschlossenen Zwischenbereich zwischen zwei Öffnungsabschnitten liegt, senkrecht zur Symmetrieebene breiter ist als der Innendurchmesser eines in das Ventilgehäuse mündenden Einlaßkanales.

Weitere Einzelheiten der Erfindung ergeben sich aus der nachfolgenden Beschreibung mehrerer Ausführungsbeispiele des erfindungsgemäßen Mischventils im Zusammenhang mit der Zeichnung. In der Zeichnung zeigen jeweils schematisch :

Figur 1 einen Schnitt durch ein Mischventil gemäß Erfindung,

Figur 2 das Kugelküken des in Fig. 1 dargestellten Mischventils in Betätigungsstangen-Achsrichtung von unten

Figur 3 zwei Gestaltungsmöglichkeiten für die Öffnungen des Kugelkükens eines Mischventils gemäß Erfindung,

Figur 4 eine andere Ausführungsform eines Kugelkükens eines Mischventils gemäß Erfindung und

Figur 5 das in Fig. 4 dargestellte Kugelküken von unten.

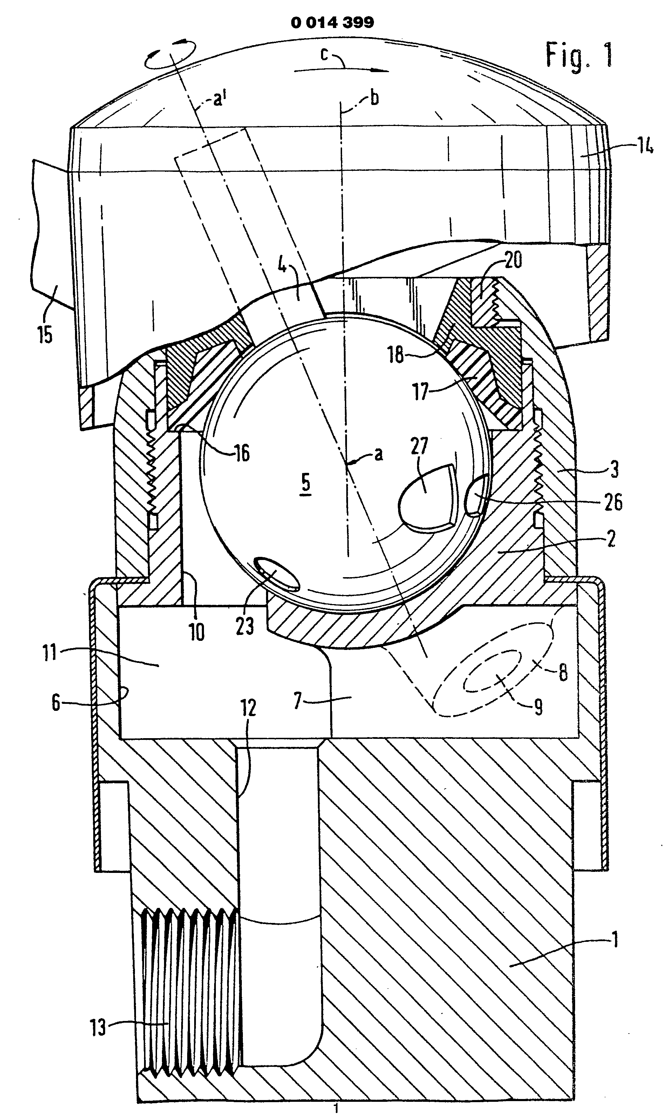

Die in Fig. 1 dargestellte Ausführungsform des erfindungsgemäßen Mischventils ist dazu bestimmt und ausgebildet, mit nicht dargestellten Anschlußstutzen einer Warmwasser- und einer Kaltwasser-Zuführungsleitung verschraubt und mit einem ebenfalls nicht dargestellten Auslauf (Hahn oder Schlauch) versehen zu werden. Dieses Mischventil besteht im wesentlichen aus vier Teilen, einem Basisteil 1, einem Ventilsitz-Einsatz 2, einer Oberwurfmutter 3 und einem mit einer Betätigungsstange 4 versehenen Kugelküken 5.

Das massiv ausgebildete Basisteil 1 weist in seinem oberen Bereich eine Ausnehmung 6 auf, in die der vorerwähnte Ventilsitz-Einsatz 2 von oben eingeschoben ist, wobei sich der Ventilsitz-Einsatz 2 über eine Rippe 7 gegen den Boden der Ausnehmung 6 abstützt. Das Basisteil 1 und der Ventilsitz-Einsatz 2 sind dicht und vorzugsweise lösbar miteinander verbunden.

Der Ventilsitz-Einsatz 2 weist in seinem oberen Bereich eine nach oben offene, halbkugelförmig ausgebildete Ausnehmung auf, die dem Kugelküken 5 als Sitz dient und in die drei zur dargestellten Schnittfläche symmetrisch angeordnete Kanäle münden, von denen zwei radial und einer exzentrisch verlaufen und deren Mündungsöffnungen von oben gesehen sternförmig angeordnet sind. Die radialen Kanäle dienen der Zufuhr von Warm- bzw. Kaltwasser und führen zu am Ventilsitz-Einsatz 2 vorgesehenen Anschlußstutzen, die mit entsprechend ausgebildeten Anschlußstutzen einer Warmwasser- bzw. Kaltwasser-Zuführungsleitung zu verbinden sind. In der Zeichnung ist nur einer der beiden am Ventilsitz-Einsatz 2 vorgesehenen Anschlußstutzen, nämlich der Warmwasser-Anschlußstutzen 8 und der darin verlaufende Warmwasser-Zuführungskanal 9 angedeutet. Der dritte, wesentlich größere und senkrecht verlaufende Kanal 10 dient als Auslaßkanal und führt in den von der Unterseite des Ventilsitz-Einsatzes 2 und der Basisteil-Ausnehmung 6 gebildeten Raum 11, aus dem eine im Basisteil 1 vorgesehene, senkrecht verlaufende Bohrung 12 führt, die in eine waagrechte Basisteilbohrung 13 übergeht, die zum Anschluß eines Hahn- oder Schlauch-Ansatzstutzens mit einem Innengewinde versehen ist.

Das Kugelküken 5 ist eine Hohlkugel und weist eine starr mit ihr verbundene Betätigungsstange 4 auf. Das freie Ende der Betätigungsstange 4 ist mit einer Kappe 14 verschraubt, die einen seitlich zur Bedienungsperson abragenden, bügelförmig ausgebildeten Griff 15 aufweist. Durch ein Schwenken des Griffes 15 kann das Kugelküken 5 um die Längsachse a' der Betätigungsstange 4 gedreht und durch ein Heben oder Senken des Griffes 15 in Richtung des Pfeiles c um eine quer zu dieser Achse und in Fig. 1 senkrecht zur Papierebene verlaufende horizontale Achse a geschwenkt werden.

Den Abschluß der halbkugelförmigen Ausnehmung des Ventilsitz-Einsatzes 2 bildet eine Ringschulter 16 für einen Dichtring 17, auf dem eine Schlitzscheibe 18 ruht, deren Schlitz der Betätigungsstange 4 als Führung dient. Der Ventilsitz-Einsatz 2 ist mit einem Außengewinde versehen, auf das eine Überwurfmutter 3 geschraubt ist, die in ihrem oberen Bereich innen rundumlaufende, stufenförmige Profilierungen aufweist. An ihrem oberen Ende weist die Überwurfmutter 3 ein Innengewinde für einen auf die Scheibe 18 einwirkenden Stellring 20 auf, durch dessen Verstellung die Beweglichkeit des Kugelkükens und die Dichtwirkung des Dichtringes 17 einstellbar ist.

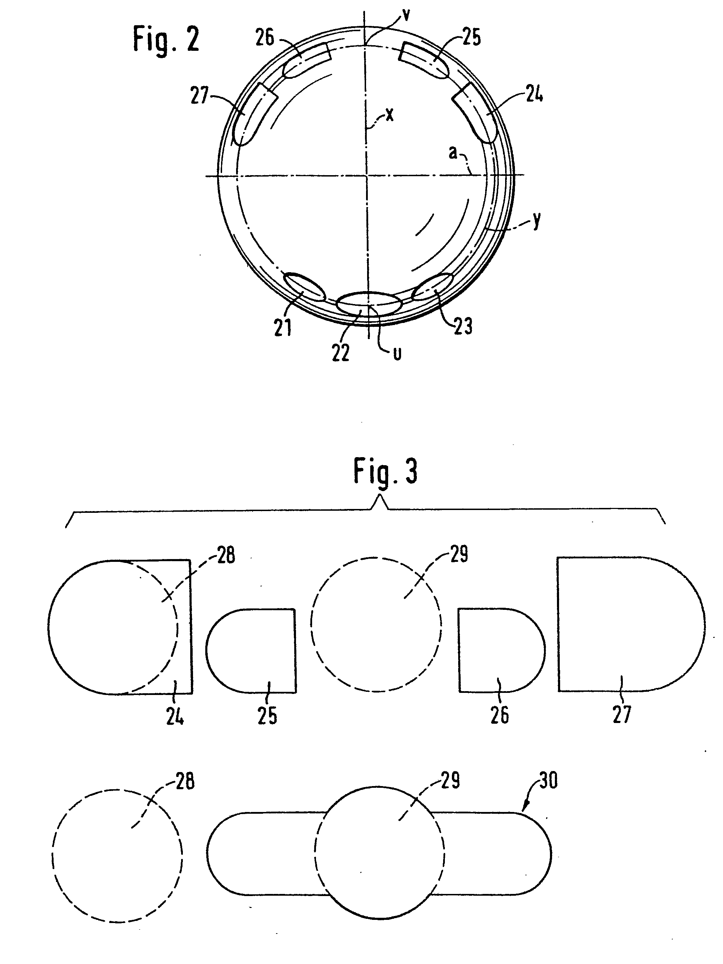

In seinem unteren, von der Betätigungsstange 4 abgewandten Bereich weist das Kugelküken 5 Öffnungen 21-23, 24-27 auf, die Ein- bzw. Auslässe bilden und im wesentlichen auf dem gleichen Breitengrad des Kugelkükens 5 in Bezug auf dessen durch seine Betätigungsstange 4 verlaufende Drehachse a' angeordnet sind. Diese Öffnungen sind jeweils spiegelbildlich zu einer durch die Betätigungsstangen-Achse a' und senkrecht zur Schwenkachse a verlaufenden Symmetrieebene x angeordnet (vgl. Fig. 2) und können, worauf später noch gesondert hingewiesen werden wird, wahlweise als Einlässe oder Auslässe dienen.

Bei der in den Fig. 1 und 2 dargestellten Kugelküken-Ausführungsform sind zwei Arten von Öffnungen vorgesehen, nämlich drei kreisförmige Öffnungen 21, 22 und 23 bzw. vier Öffnungen, die jeweils die Form eines liegenden Rechteckes aufweisen, dessen eine Schmalseite im wesentlichen halbkreisförmig ausgebildet ist. Von den drei kreisförmigen Öffnungen 21, 22 und 23 weist die mittler Öffnung 22 einen Durchmesser auf, der im wesentlichen dem der in den Kugelküken-Ventilsitz mündenden Wasserzuflußkanäle entspricht und größer ist als der, der beiden benachbarten, untereinander gleich großen Öffnungen 21, 23. Die den drei kreisförmigen Öffnungen 21, 22, 23 auf dem im wesentlichen gleichen Kugelküken-Breitengrad y gegenüberliegenden vier Öffnungen sind spiegelbildlich zu einer durch die Betätigungsstangen-Achse a' und senkrecht zur Schwenkachse a verlaufenden Symmetrieebene x angeordnet, wobei der Abstand zwischen den beiden mittleren Öffnungen 25, 26 größer ist als der Durchmesser der im Ventilsitz vorgesehenen Wassereinlaßöffnungen 28, 29 (Fig. 3) und alle vier Öffnungen auf ihrer von der Symmetrieebene x abgewandten Schmalseite im wesentlichen halbkreisförmig ausgebildet sind. Die Breite der äußeren Öffnungen 24 und 27 entspricht im wesentlichen dem der vorerwähnten Wassereinlaßöffnungen, während die Länge der Öffnungen 24 und 27 etwas größer ist dieser Durchmesser ist.

Die einander in den Abmessungen entsprechenden kleineren inneren Öffnungen 25 und 26 sind sowohl in der Breite als auch in der Länge kleiner als die ihnen benachbarten äußeren Öffnungen 24 und 27 ausgebildet. Die « Unterkanten » aller sieben Öffnungen 21 bis 27 liegen auf dem gleichen Kugelküken-Breitengrad.

Statt der beiden inneren Öffnungen 25 und 26 kann auch eine beispielsweise halbringförmige Öffnung vorgesehen sein, die zwei den beiden inneren Öffnungen 25 und 26 entsprechenden Öffnungsabschnitte aufweist.

Statt der drei kreisförmigen Öffnungen 21, 22 und 23 kann auch (vgl. Fig. 3) eine Öffnung 30 vorgesehen sein, die in der Mitte im wesentlichen kreisförmig ausgebildet ist und an die sich seitliche Ovalhälften mit kleinerem Kreisbogenradius anschließen.

Die Mittelpunkte der mittleren der drei kreisförmigen Öffnungen 21, 22 und 23 und die der Krümmungshalbkreise der größeren der übrigen vier Öffnungen 24, 25, 26 und 27, liegen ebenfalls auf dem gleichen Kugelkükenbreitengrad. Dieser auf die durch die Betätigungsstange 4 des Kugelkükens 5 verlaufende Drehachse a' bezogene Breitengrad y entspricht dem auf die Vertikalachse b des Ventilsitz-Einsatzes 2 bezogenen Breitengrad y auf dem die Mittelpunkte der kreisförmigen Einlaßöffnungen 28, 29 der in den Ventilsitz mündenden Wasserzuflußkanäle liegen. Der Abstand der Mittelpunkte vorgenannter Einlaßöffnungen beträgt die Hälfte des Abstandes, der zwischen den Mittelpunkten der jeweils spiegelbildlich angeordneten und halbkreisförmig ausgebildeten Schmalseiten der äußeren der vier Öffnungen vorgesehen ist.

Nach dem Einsatz des Kugelkükens 5 in den Ventilsitz-Einsatz 2 und dem Einlegen des Dichtringes 17 kann die Betätigungsstange 4 so ausgerichtet werden, daß sich die Breitengrade der Kugelkopf-Öffnungen 21 bis 23 bzw. 30 und 24 bis 27 und der Wasserzulauföffnungen 28, 29 decken. Durch Drehen der Betätigungsstange 4 um deren Längsachse a' ist es dann möglich, eine Kommunikation zwischen der einen und/oder der anderen der beiden Wassereinlaßöffnungen 28, 29 und der einen und/oder der anderen Kugelkopföffnungen herzustellen, wobei es zweckmäßig ist, die Betätigungsstange 4 zunächst soweit zu drehen, daß sich die größere der drei kreisförmigen Kugelkopf-Öffnungen 22 (bzw. das Zentrum der einstückig ausgebildeten Kugelkopf-Öffnung 30) mit einer der beiden Einlaßöffnungen 28, 29 deckt. Anschließend ist dafür zu sorgen, daß eine weitere Drehung der Betätigungsstange 4 um deren Längsachse a' ausgeschlossen ist. Hierzu ist bei der dargestellten Ausführungsform die zuvor schon erwähnte, axial durch die Überwurfmutter 3 gesicherte Schlitzscheibe 18 vorgesehen, deren Schlitz einerseits der seitlichen Führung der Betätigungsstange 4 und andererseits der Verdrehsicherung dieser Stange dient. Nach Montage der Schlitzscheibe 18 und Verschraubung mit ihrer Kappe 14 kann die Betätigungsstange 4 nur noch in Richtung des Pfeiles c (oder entgegengesetzt) geschwenkt oder zusammen mit dem Kugelküken 5 um die Verdrehachse a' gedreht werden. Ein Verschwenken in Richtung des Pfeiles c (oder umgekehrt) hat eine Veränderung der Menge, der in das Kugelküken-Innere strömenden Flüssigkeit zur Folge und ein Verdrehen um die Verdrehachse a', daß andere Kugelkopf-Öffnungen als bisher mit der einen und/oder der anderen der beiden Wassereinlaßöffnungen 28, 29 zusammenwirken, so daß sich hierdurch das Mischungsverhältnis der zuströmenden Flüssigkeiten ändert.

Die in das Kugelküken 5 strömende Flüssigkeit durchströmt das Kugelküken und verläßt dieses auf der gegenüberliegenden Seite durch die eine und/oder die andere der dort vorgesehenen Kugelküken-Öffnungen, und weiter nach außen über den im Ventilsitz-Einsatz 2 vorgesehenen Auslaßkanal 10, den sich daran anschließenden Raum 11 und die sich daran anschließenden Kanäle 12 und 13.

Bei dem in Fig. 1 dargestellten Mischventil hat, wenn sein linker, in der Zeichnung gestrichelt angedeuteter Anschlußstutzen 8 an eine Warmwasserleitung und sein rechter, in der Zeichnung nicht dargestellter Anschlußstutzen an eine Kaltwasserleitung angeschlossen ist, ein Drehen der Kappe 14 — und damit ein Drehen des Kugelkükens 5 — um die Verdrehachse a' nach rechts eine Abnahme der Mischtemperatur des ausströmenden Wassers und eine Verdrehung nach links (im Uhrzeigersinn) eine Erhöhung dieser Temperatur zur Folge. Wird der linke Anschlußstutzen 8 dagegen an eine Kaltwasserleitung und der rechte Anschlußstutzen an eine Warmwasserleitung angeschlossen, so ist die Kappe 14 nach rechts zu drehen, wenn die Temperatur des ausströmenden Wassers erhöht und nach links, wenn die Temperatur des austretenden Wassers erniedrigt werden soll. Insoweit entspricht das dargestellte Mischventil völlig den bisher bekannten Mischventilen der eingangs erwähnten Art. Beim erfindungsgemäßen Mischventil ist es jedoch möglich, bei einer derartigen Anschlußsituation den gewünschten Kappendrehsinn ohne großen technischen Aufwand beizubehalten. Hierzu ist es lediglich erforderlich, das Kugelküken 5 aus dem Ventilsitz-Einsatz 2 zu entnehmen und um 180° versetzt wieder einzusetzen, so daß die Kugelküken-Öffnungen, die bisher dem Wasserauslaß dienten, jetzt dem Wassereinlaß dienen. Dies überrascht zunächst, ergibt sich jedoch daraus, daß das Kugelküken 5 auf zwei einander gegenüberliegenden Seiten Öffnungen aufweist, die — trotz jeweils symmetrischer Anordnung — in Zahl und Anordnung voneinander abweichen, so daß die Ebene, zu der diese Öffnungen jeweils symmetrisch angeordnet sind, in dem einen Fall durch eine Öffnung und in dem anderen Fall zwischen zwei Öffnungen verläuft. Dies hat zur Folge, daß bei einem um 180° versetzten Einsetzen des Kugelkükens, eine Vertauschung der Zuströmverhältnisse zum Kugelküken-Inneren eintritt. Diese Umkehr der Drehrichtung ist aus Fig. 3 ersichtlich, bei der im oberen Teil eine geradzahlige Anzahl von vier Einlaßöffnungen 24 bis 27, und im unteren Teil eine ungerade Anzahl, nämlich eine Einlaßöffnung 30 vorgesehen ist. Die Einlaßöffnung 30 weist seitliche schmale Erweiterungen auf, die mit den gestrichelt dargestellten Wassereinlaßöffnungen 28 und 29 des Ventilsitzes 2 in Kommunikation gebracht werden können. In den beiden schematisch dargestellten Situationen ist das Kugelküken um die Drehachse a' (Fig. 1) im Uhrzeigersinn bis zum Anschlag gedreht (vom Inneren des Kükens in Richtung zu den Einlaßöffnungen 29 und 30 des Ventilsitzes 2 gesehen). Im oberen Teil ist die linke Öffnung 24 des Kükens geöffnet und die rechte Kaltwasseröffnung 29 durch den Steg zwischen den Öffnungen 25 und 25 des Kükens verschlossen. Im unteren Teil ist demgegenüber die Kaltwasseröffnung 29 durch den kreisrunden mittleren Teil der Öffnung 30 des Kükens geöffnet, wogegen die linke Warmwasseröffnung 28 durch die Kugelwandung verschlossen ist.

Die Drehbarkeit der Betätigungsstange 4 ist vorzugsweise begrenzt, so daß sie im Uhrzeigersinn und im Gegenuhrzeigersinn jeweils nur um einen bestimmten Betrag gedreht werden kann. Bei einer bevorzugten Ausführungsform des erfindungsgemäßen Mischventils ist hierzu die Betätigungsstange 4 zumindest bereichsweise im Querschnitt rautenförmig ausgebildet und in diesem Bereich in einem beispielsweise in der Scheibe 18 vorgesehenen Schlitz geführt, dessen Breite im wesentlichen der Länge der kleineren Querschnitts-Diagonale der Betätigungsstange 4 entspricht. Dabei entspricht der Spitzenwinkel der Raute an der größeren Querschnitts-Diagonalen vorzugsweise dem Drehwinkel der Betätigungsstange 4.

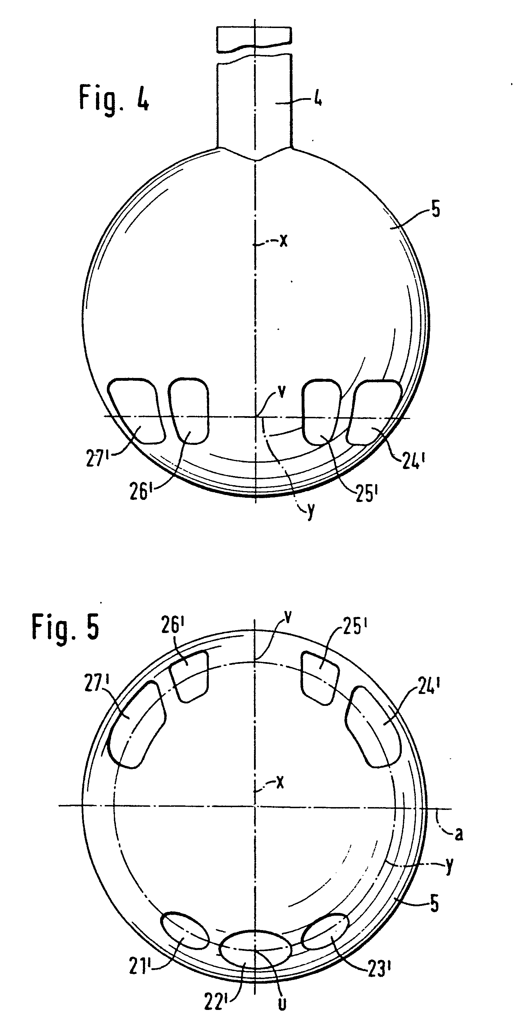

Das in den Fig. 4 und 5 dargestellte Kugelküken unterscheidet sich von dem in den Fig. 1 und 2 dargestellten Kugelküken nur in der Form der auf seiner einen Seite vorgesehenen Öffnungen 24' bis 27'. Im Gegensatz zu den Öffnungen 24 bis 27 des in den Fig. 1 und 2 dargestellten Kugelkükens weisen diese Öffnungen 24' bis 27' nicht jeweils die Form eines liegenden Rechteckes auf, dessen von der Symmetrieebene x abgewandte Schmalseite im wesentlichen halbkreisförmig ausgebildet ist. Die Öffnungen 24' bis 27' weisen vielmehr jeweils die Form eines Trapezes auf, dessen Ecken abgerundet sind. Die übrigen Öffnungen 21' bis 23' des in den Fig. 4 und 5 dargestellten Kugelkükens entsprechen dagegen sowohl in der Form als auch in der Anordnung den Öffnungen 21 bis 23 des in den Figuren 1 und 2 dargestellten Kugelkükens.

## Ansprüche

1. Mischventil für Flüssigkeiten, insbesondere für sanitäre Zwecke, mit einem Kugelküken (5), das miteinander kommunizierende Ein- und Auslaßöffnungen (24-27 ; 21-23, 30) aufweist, einem Ventilgehäuse (1-3), das für das Kugelküken (5) eine diesem angepaßte Ventilfläche (2) aufweist, in die zwei mit wenigstens einer Einlaßöffnung (24-27) des Kugelkükens (5) in Kommunikation bringbare Einlaßkanäle (28, 29) für die zu mischenden Flüssigkeiten und ein Auslaßkanal (10) münden, und einer mit dem Kugelküken (5) verbundenen und in einer Ausnehmung (18) des Ventilgehäuses geführten Betätigungsstange (4), mittels der das Kugelküken (5) zur Veränderung der Menge der ausströmenden Flüssigkeit verschwenkbar und zur Veränderung des Mischungsverhältnisses der zuströmenden Flüssigkeiten drehbar ist, wobei die Ein- und Auslaßöffnungen des Kugelkükens (5) jeweils spiegelbildlich zu einer durch die Betätigungsstangen-Achse (a') und senkrecht zur Schwenkachse (a) verlaufenden Symmetrieebene (x) angeordnet sind, dadurch gekennzeichnet, daß die Einlaßöffnungen (24-27) und die Auslaßöffnungen (21-23, 30) des Kugelkükens (5) Abschnitte aufweisen, die im wesentlichen auf dem gleichen Breitengrad (y) des Kugelkükens (5) in Bezug auf dessen durch seine Betätigungsstange (4) verlaufende Drehachse (a') angeordnet sind, daß der Schnittpunkt (u, v) zwischen der Symmetrieebene (x) und dem Breitengrad (y) auf der einen Seite des Kugelkükens (5) mit einem Öffnungsabschnitt (22, 30) zusammenfällt und auf der anderen Seite auf einem geschlossenen Zwischenbereich zwischen zwei Öffnungsabschnitten (25, 26) liegt und daß die Einlaß- und Auslaßöffnungen des Kugelkükens (5) durch einen um die Betätigungsstangen-Achse (a') um 180° versetzten Einsatz des Kugelkükens (5) in das Gehäuse vertauschbar sind, so daß die Bewegungsrichtung für die Änderung des Mischungsverhältnisses vertauscht ist.

2. Mischventil nach Anspruch 1, dadurch gekennzeichnet, daß das Kugelküken (5) im wesentlichen als Hohlkugel ausgebildet ist.

3. Mischventil nach einem der vorhergehenden Ansprüche, dadurch gekennzeichnet, daß das Kugelküken (5) auf der einen Seite eine gerade (24-27) und auf der anderen Seite eine ungerade Zahl (21-23, 30) an auf dem Breitengrad (y) liegenden Öffnungsabschnitten aufweist.

4. Mischventil nach Anspruch 3, dadurch gekennzeichnet, daß das Kugelküken (5) auf der Seite mit der geraden Zahl an Öffnungsabschnitten (24-27) mindestens zwei, vorzugsweise vier, und auf der Seite mit der ungeraden Zahl an Öffnungsabschnitten mindestens einen (30), vorzugsweise drei Öffnungsabschnitte (21-23) aufweist.

5. Mischventil nach Anspruch 4, dadurch gekennzeichnet, daß die Querschnittsfläche von äußeren Öffnungen (24, 27) der Seite mit der geraden Zahl an Öffnungsabschnitten und die Querschnittsfläche der mittleren Öffnung (22) auf der Seite mit der ungeraden Zahl an Öffnungsabschnitten mindestens der Querschnittsfläche je eines in das Ventilgehäuse mündenden Einlaßkanals (28, 29) entspricht.

6. Mischventil nach einem der vorhergehenden Ansprüche, dadurch gekennzeichnet, daß die Öffnungen (21-23) im Kugelküken (5) mindestens auf einer Seite, vorzugsweise auf der Seite mit der ungeraden Zahl an Öffnungsabschnitten, jeweils kreisförmig ausgebildet sind.

7. Mischventil nach einem der vorhergehenden Ansprüche, dadurch gekennzeichnet, daß die Öffnungen (24-27) im Kugelküken (5) auf mindestens einer Seite, vorzugsweise auf der Seite mit der geraden Zahl an Öffnungschnitten, jeweils die Form eines liegenden Rechteckes aufweisen, dessen von der Symmetrieebene (x) abgewandte Schmalseite im wesentlichen halbkreisförmig ausgebildet ist.

8. Mischventil nach einem der Ansprüche 1 bis 6, dadurch gekennzeichnet, daß die Öffnungen (24'-27') im Kugelküken (5) auf mindestens einer Seite, vorzugsweise auf der Seite, auf der der Schnittpunkt (v) zwischen der Symmetrieebene (x) und dem Breitengrad (y) auf einem geschlossenen Zwischenbereich zwischen zwei Öffnungsabschnitten liegt, jeweils die Form eines Trapezes mit abgerundeten Ecken aufweisen.

9. Mischventil nach einem der vorhergehenden Ansprüche, dadurch gekennzeichnet, daß die Öffnungen (25, 26) im Kugelküken (5) die näher an der Symmetrieebene (x) liegen, auf der Seite, auf der der Schnittpunkt (v) zwischen der Symmetrieebene (x) und dem Breitengrad (y) auf einem geschlossenen Zwischenbereich zwischen zwei Öffnungsabschnitten liegt, kleiner ausgebildet sind als die von der Symmetrieebene (x) weiter entfernt liegenden Öffnungen (24, 27).

10. Mischventil nach einem der vorhergehenden Ansprüche, dadurch gekennzeichnet, daß die Öffnung (22) bzw. die Öffnungen im Kugelküken (5), die näher an der Symmetrieebene (x) liegen, auf der Seite, auf der der Schnittpunkt (u) zwischen der Symmetrieebene (x) und dem Breitengrad (y) mit einem Öffnungsabschnitt (22, 30) zusammenfällt, größer ausgebildet sind als die von der Symmetrieebene (x) weiter entfernt liegenden Öffnungen (21, 23).

11. Mischventil nach einem der Ansprüche 1 bis 9, dadurch gekennzeichnet, daß auf der Seite, auf der der Schnittpunkt (u) zwischen der Symmetrieebene (x) und dem Breitengrad (y) mit einem Öffnungsabschnitt zusammenfällt, nur eine quergestreckte Öffnung (30) vorgesehen ist, die in der Mitte im wesentlichen kreisförmig ausgebildet ist und an die sich seitliche Öffnungsabschnitte, vorzugsweise Ovalhälften mit kleinerem äußeren Kreisbogenradius anschließen.

12. Mischventil nach einem der vorhergehenden Ansprüche, dadurch gekennzeichnet, daß der von der Symmetrieebene (x) durchquerte Zwischenbereich zwischen den Öffnungsabschnitten (25, 26) auf der Kugelkükenseite, auf der der Schnittpunkt (v) zwischen der Symmetrieebene (x) und dem Breitengrad (y) auf einem geschlossenen Zwischenbereich zwischen zwei Öffnungsabschnitten liegt, senkrecht zur Symmetrieebene (x) breiter ist als der Innendurchmesser eines in das Ventilgehäuse mündenden Einlaßkanals (28, 29).

13. Mischventil nach einem der vorhergehenden Ansprüche, dadurch gekennzeichnet, daß die Betätigungstange (4) zumindest bereichsweise im Querschnitt rautenförmig ausgebildet ist und in diesem Bereich in einem Schlitz des Ventilgehäuses geführt ist, dessen Breite im wesentlichen der Länge der kleineren Querschnittsdiagonale der Betätigungsstange (4) entspricht.

### Claims

1. Mixing valve for liquids, particularly for sanitary purposes, with a spherical plug (5), having communicating inlets and outlets (24-27 ; 21-23, 30), a valve housing (1-3), having a valve face (2) adapted to the spherical plug (5) and into which issues two intake pipes (28, 29) for the liquids to be mixed and which can be connected to at least one inlet (24-27) of the spherical plug (5), as well as a discharge pipe (10), and an operating rod (4) connected to the spherical plug (5) and guided in a recess (18) of the valve housing, and by means of said operating rod (4) the spherical plug (5) is pivotable for varying the quantity of the outflowing liquid and is rotatable for varying the mixing ratio of the inflowing liquids, the inlets and outlets of the spherical plug (5) being arranged, in each case homologously, to a plane of symmetry (x) passing through the operating rod axis (a') and at right angles to the pivot axis (a), characterized in that the inlets (24-27) and outlets (21-23, 30) of the spherical plug (5) have sections which are arranged at substantially the same latitude (y) of the spherical plug (5) with reference to its rotation axis (a') passing through its operating rod (4), that the intersection point (u, v) between the plane of symmetry (x) and the latitude (y) coincides on one side of the spherical plug (5) with an opening section (22, 30) and on the other side is located on a closed intermediate zone between two opening sections (25, 26), and that the inlets and outlets of spherical plug (5) are interchangeable by introducing the spherical plug (5) in the housing displaced by 180° about the operating rod axis (a'), so that the direction of movement for changing the mixing ratio is interchanged.

2. Mixing valve according to claim 1, characterized in that the spherical plug (5) is essentially constructed as a hollow sphere.

3. Mixing valve according to one of the preceding claims, characterized in that the spherical plug (5) has on one side an even number (24-27) and on the other side an uneven number (21-23, 30) of opening sections located on the latitude (y).

4. Mixing valve according to claim 3, characterized in that on the side with the even number of opening sections (24-27), the spherical plug (5) has at least two and preferably four opening sections and on the side with the uneven number of opening sections has at least one (30) and preferably three opening sections (21-23).

5. Mixing valve according to claim 4, characterized in that the cross-sectional area of the outer openings (24, 27) of the side with the even number of opening sections and the cross-sectional area of the central opening (22) on the side with the uneven number of opening sections at least corresponds to the cross-sectional area of each of the intake pipes (28, 29) issuing into the valve housing.

6. Mixing valve according to one of the preceding claims, characterized in that the openings (21-23) in the spherical plug (5) on at least one side and preferably on the side with the uneven number of opening sections are in each case constructed in a circular manner.

7. Mixing valve according to one of the preceding claims, characterized in that the openings (24-27) in the spherical plug (5) on at least one side and preferably on the side with the even number of opening sections have in each case the shape of a horizontal rectangle, whose narrow side remote from the plane of symmetry (x) is constructed in a substantially semicircular manner.

8. Mixing valve according to one of the claims 1 to 6, characterized in that the openings (24'-27') in the spherical plug (5) on at least one side and preferably on the side where the intersection (v) between the plane of symmetry (x) and the latitude (y) is located on a closed intermediate zone between two opening sections, have in each case the shape of a trapezium with rounded angles.

9. Mixing valve according to one of the preceding claims, characterized in that the openings (25, 26) in the spherical plug (5) positioned closer to the plane of symmetry (x) are made smaller on the side on which the intersection (v) between plane of symmetry (x) and the latitude (y) is located on a closed intermediate zone between two opening sections than the openings (24, 27) more remote from the plane of symmetry (x).

10. Mixing valve according to one of the preceding claims, characterized in that the opening (22) or openings in the spherical plug (5) closer to the plane of symmetry (x) are larger on the side on which the intersection (u) between the plane of symmetry (x) and the latitude (y) coincides with an opening section (22, 30) than the openings (21, 23) more remote from the plane of symmetry (x).

11. Mixing valve according to one of the claims 1 to 9, characterized in that on the side on which the intersection (u) between the plane of symmetry (x) and the latitude (y) coincides with an opening section, only one transversely directed opening (30) is provided, which is constructed in a substantially circular manner in the centre and to which are connected lateral opening sections, preferably oval halves with a smaller outer arc radius.

12. Mixing valve according to one of the preceding claims, characterized in that the intermediate zone between the opening sections (25, 26) traversed by the plane of symmetry (x) on the spherical plug side on which the intersection (v) between the plane of symmetry (x) and the latitude (y) is located on a closed intermediate zone between two opening sections, is wider at right angles to the plane of symmetry (x) than the internal diameter of an intake pipe (28, 29) issuing into the valve housing.

13. Mixing valve according to one of the preceding claims, characterized in that the operating rod (4) is at least zonally constructed in a cross-sectionally rhombic manner and in this area is guided in a slot of the valve housing, whose width substantially corresponds to the length of the smaller cross-sectional diagonal of the operating rod (4).

**Revendications**

1. Valve mélangeuse pour liquides, notamment à des fins sanitaires, avec un boisseau sphérique (5) qui présente des orifices d'admission et d'évacuation (24-27 ; 21-23, 30) communiquant mutuellement, un corps de valve (1-3) qui comporte pour le boisseau sphérique (5) une surface obturatrice (2) adaptée à ce dernier et dans laquelle débouchent deux canaux (28, 29) d'admission des liquides à mélanger, pouvant être mis en communication avec au moins un orifice d'admission (24-27) du boisseau sphérique (5), ainsi qu'un canal d'évacuation (10), et une tige d'actionnement (4) reliée au boisseau sphérique (5) et guidée dans un évidement (18) du corps de valve, au moyen de laquelle le boisseau sphérique (5) peut être soumis à un pivotement pour faire varier la quantité du liquide à la sortie et à une rotation pour faire varier le rapport du mélange des liquides à l'entrée, les orifices d'admission et d'évacuation du boisseau sphérique (5) étant disposés chacun symétriquement par rapport à un plan de symétrie (x) passant par l'axe (a') de la tige d'actionnement et perpendiculaire à l'axe de pivotement (a), caractérisée par le fait que les orifices d'admission (24-27) et les orifices d'évacuation (21-23, 30) du boisseau sphérique (5) présentent des zones qui sont placées pour l'essentiel sur le même degré de latitude (y) du boisseau sphérique (5) par rapport à l'axe de rotation (a') de ce dernier passant par sa tige d'actionnement (4), par le fait que le point d'intersection (u, v) entre le plan de symétrie (x) et le degré de latitude (y) coïncide d'un côté du boisseau sphérique (5) avec une zone d'orifice (22, 30) et se trouve, de l'autre côté, sur une région intermédiaire fermée entre deux zones d'orifices (25, 26), et par le fait que les orifices d'admission et d'évacuation du boisseau sphérique (5) peuvent être intervertis grâce à une insertion du boisseau sphérique (5) décalée de 180° autour de l'axe (a') de la tige d'actionnement, de telle sorte que la direction du mouvement soit inversée pour la modification du rapport de mélange.

2. Valve mélangeuse selon la revendication 1, caractérisée par le fait que le boisseau sphérique (5) est essentiellement réalisé sous la forme d'une sphère creuse.

3. Valve mélangeuse selon l'une quelconque des revendications précédentes, caractérisée par le fait que le boisseau sphérique (5) présente d'un côté un nombre pair (24-27) et, de l'autre côté, un nombre impair (21-23, 30) de zones d'orifices situées sur le degré de latitude (y).

4. Valve mélangeuse selon la revendication 3, caractérisée par le fait que le boisseau sphérique (5) présente, du côté avec le nombre pair de zones d'orifices (24-27), au moins deux, de préférence quatre zones d'orifices et, de l'autre côté avec le nombre impair de zones d'orifices, au moins une (30), de préférence trois zones d'orifices (21-23).

5. Valve mélangeuse selon la revendication 4, caractérisée par le fait que la superficie de la section d'orifices externes (24, 27) du côté avec le nombre pair de zones d'orifices et la superficie de la section de l'orifice central (22) du côté avec le nombre impair de zones d'orifices correspondent au moins à la superficie de la section de l'un respectif des canaux d'admission (28, 29) débouchant dans le corps de la valve.

6. Valve mélangeuse selon l'une quelconque des revendications précédentes, caractérisée par le fait que les orifices (21-23) dans le boisseau sphérique (5) présentent chacun une forme circulaire au moins d'un côté, de préférence du côté avec le nombre impair de zones d'orifices.

7. Valve mélangeuse selon l'une quelconque des revendications précédentes, caractérisée par le fait que les orifices (24-27) dans le boisseau sphérique (5) présentent chacun au moins d'un côté, de préférence du côté avec le nombre pair de zones d'orifices, la forme d'un rectangle à plat dont le petit côté éloigné du plan de symétrie (x) est pour l'essentiel semi-circulaire.

8. Valve mélangeuse selon l'une quelconque des revendications 1 à 6, caractérisée par le fait que les orifices (24'-27') dans le boisseau sphérique (5) présentent chacun la forme d'un trapèze à angles arrondis, au moins d'un côté, de préférence du côté sur lequel le point d'intersection (v) entre le plan de symétrie (x) et le degré de latitude (y) se trouve sur une région intermédiaire fermée entre deux zones d'orifices.

9. Valve mélangeuse selon l'une quelconque des revendications précédentes, caractérisée par le fait que, du côté sur lequel le point d'intersection (v) entre le plan de symétrie (x) et le degré de latitude (y) se trouve sur une région intermédiaire fermée entre deux zones d'orifices, les orifices (25, 26) dans le boisseau sphérique (5) qui sont plus proches du plan de symétrie (x) sont plus petits que les orifices (24, 27) plus éloignés du plan de symétrie (x).

10. Valve mélangeuse selon l'une quelconque des revendications précédentes, caractérisée par le fait que, du côté sur lequel le point d'intersection (u) entre le plan de symétrie (x) et le degré de latitude (y) coïncide avec une zone d'orifice (22, 30), l'orifice (22) ou les orifices dans le boisseau sphérique (5) qui sont plus proches du plan de symétrie (x) sont plus grands que les orifices (21, 23) plus éloignés du plan de symétrie (x).

11. Valve mélangeuse selon l'une quelconque des revendications 1 à 9, caractérisée par le fait que, du côté sur lequel le point d'intersection (u) entre le plan de symétrie (x) et le degré de latitude (y) coïncide avec une zone d'orifice, il est prévu seulement un orifice (30) s'étendant transversalement, qui est pour l'essentiel circulaire en son centre et auquel se raccordent des zones d'orifice latérales, de préférence des demi-ovales à plus petit rayon externe de circonférence.

12. Valve mélangeuse selon l'une quelconque des revendications précédentes, caractérisée par le fait que la zone intermédiaire traversée par le plan de symétrie (x) entre les zones d'orifices (25, 26), du côté du boisseau sphérique sur lequel le point d'intersection (v) entre le plan de symétrie (x) et le degré de latitude (y) se trouve sur une région intermédiaire fermée entre deux zones d'orifices, est plus large, perpendiculairement au plan de symétrie (x), que le diamètre interne d'un canal d'admission (28, 29) débouchant dans le corps de la valve.

13. Valve mélangeuse selon l'une quelconque des revendications précédentes, caractérisée par le fait que la tige d'actionnement (4) est, au moins par zones, de section rhombiforme et est guidée dans cette zone par une fente du corps de la valve, dont la largeur correspond pour l'essentiel à la longueur de la plus petite diagonale de section de la tige d'actionnement (4).

0 014 399

Fig. 1

**Fig. 2**

**Fig. 3**

Fig. 4

Fig. 5